(19) Europäisches Patentamt / European Patent Office / Office européen des brevets

(11) **EP 4 769 575 A1**

(12) **EUROPEAN PATENT APPLICATION**
published in accordance with Art. 153(4) EPC


(43) Date of publication:
**01.07.2026 Bulletin 2026/27**

(21) Application number: **25831244.6**

(22) Date of filing: **20.06.2025**

(51) International Patent Classification (IPC):
***H01M 4/62*** *(2006.01)* ***H01M 4/525*** *(2010.01)*
***H01M 4/505*** *(2010.01)* ***H01M 4/131*** *(2010.01)*
***H01M 10/052*** *(2010.01)* ***H01M 4/02*** *(2006.01)*

(52) Cooperative Patent Classification (CPC):
**H01M 4/02; H01M 4/131; H01M 4/505; H01M 4/525; H01M 4/62; H01M 10/052;**
Y02E 60/10

(86) International application number:
**PCT/KR2025/008624**

(87) International publication number:
**WO 2025/264050 (26.12.2025 Gazette 2025/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.06.2024 KR 20240080648**



(71) Applicant: **LG ENERGY SOLUTION, LTD.**
**Seoul 07335 (KR)**

(72) Inventors:
- **KIM, Young Seok**
  **Daejeon 34122 (KR)**
- **JEONG, Jae Hoon**
  **Daejeon 34122 (KR)**
- **LEE, Gil Ryeong**
  **Daejeon 34122 (KR)**
- **KIM, Tae Gon**
  **Daejeon 34122 (KR)**

(74) Representative: **Hoffmann Eitle**
**Patent- und Rechtsanwälte PartmbB**
**Arabellastraße 30**
**81925 München (DE)**


(54) **POSITIVE ELECTRODE SLURRY COMPOSITION FOR SECONDARY BATTERY, AND POSITIVE ELECTRODE FOR SECONDARY BATTERY AND LITHIUM SECONDARY BATTERY COMPRISING SAME**


(57) The present invention relates to a positive electrode slurry composition including a lithium transition metal oxide containing nickel; and a polyamide-based binder, wherein the polyamide-based binder includes a polyamide-based polymer containing an aliphatic structure and an aromatic structure on a main chain and containing one or more selected from the group consisting of a carbonyl group, a carboxy group, and an ester group as a functional group on a side chain, the polyamide-based polymer includes the aromatic structure in an amount of 90 mol% to 99 mol% relative to the total number of moles of a repeating unit of the polymer, and the polyamide-based polymer includes the functional group in an amount of 0.005 mol% to 1 mol% on the basis of the total number of moles of the polymer, and the present invention relates to a positive electrode and a lithium secondary battery including the same.


FIG. 1

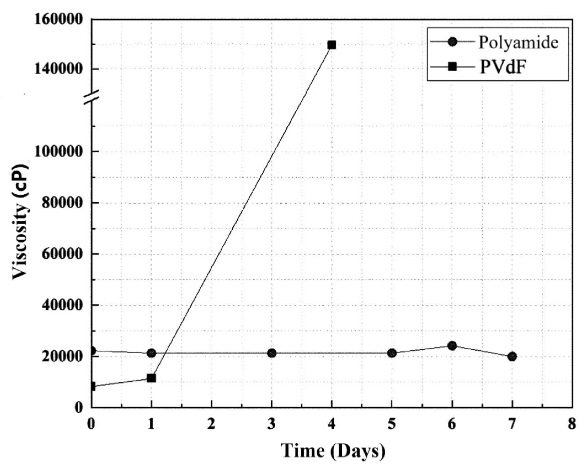


EP 4 769 575 A1

## Description

### TECHNICAL FIELD

This application claims priority from Korean Patent Application No. 10-2024-0080648, filed on June 20, 2024, the disclosure of which is incorporated by reference herein.

The present invention relates to a positive electrode slurry composition for a secondary battery, and a positive electrode for a secondary battery and a lithium secondary battery including the positive electrode slurry composition.

### BACKGROUND ART

As technological development and demand for mobile devices increase, demand for secondary batteries as a source of energy is rapidly increasing, and among such secondary batteries, a lithium secondary battery with high energy density and operating potential, long cycle lifetime, and low self-discharge rate has been commercialized and widely used.

An electrode of the lithium secondary battery is prepared in a way that a positive electrode active material or a negative electrode active material, and a binder resin ingredient are mixed and dispersed in a solvent to prepare a slurry, and the slurry is applied onto a surface of an electrode current collector, and dried to form a composite layer.

As the positive electrode active material, a lithium-containing cobalt oxide such as $LiCoO_2$ with a layered structure, a lithium-containing nickel oxide such as $LiNiO_2$ with a layered structure, a lithium-containing manganese oxide such as $LiMn_2O_4$ with a spinel crystal structure, etc. are being used.

Among these, $LiCoO_2$, which is excellent in all properties such as excellent cycle characteristics, is widely used, but is low in safely, and as a raw material, its price is high due to limited resource of cobalt, and there are limits to its mass use as a power source in an electric vehicle field, etc. In addition, $LiNiO_2$ is relatively inexpensive, and exhibits battery characteristics of high discharge capacity, but there are problems such as rapid phase transition of a crystal structure due to volume change accompanying charge/discharge cycle, and rapidly decreasing stability when exposed to air and humidity. Meanwhile, a lithium manganese oxide such as $LiMnO_2$ and $LiMn_2O_4$ has the advantage of using manganese that is abundant as a raw material and environmentally friendly, but has the disadvantages of low capacity, poor high-temperature characteristics and cycle characteristics.

To solve these problems, trials and research are being conducted in order to use a lithium transition metal oxide having nickel-cobalt-manganese being mixed for a positive electrode active material. The positive electrode active material, prepared by mixing nickel, cobalt, and manganese, has the advantage that all properties are improved, compared to a battery prepared by using each of the transition metals separately.

However, the lithium transition metal oxide with nickel-cobalt-manganese being mixed has a problem that the stability decreases when exposed to humidity in the air due to the nickel. In particular, moisture in the air and nickel among the nickel-cobalt-manganese react with each other to generate a hydroxy group. In addition, the generated hydroxy group reacts with a binder generally included in a positive electrode slurry composition to cause gelation. When the binder is gelated, the viscosity of the positive electrode slurry composition also increases rapidly, thereby reducing uniformity of a positive electrode active material layer to cause reduction in adhesion for an electrode and the inside of the electrode, and to cause problems such as failure to develop the cell capacity and decreased output.

As a binder for a conventional positive electrode slurry composition, polyvinylidene fluoride (PVdF) which has high thermal stability and good oxidation resistance and chemical resistance has been used for a long time. However, PVdF exhibits the binder gelation and the phenomenon of increasing viscosity of the positive electrode slurry composition, as previously described, and such problems need to be solved. In addition, it cannot be ruled out that PVdF may become subject to future regulations from a social/environmental perspective.

Accordingly, for the use of the lithium transition metal oxide containing a three-ingredient transition metal of nickel-cobalt-manganese, improvement in moisture resistance is required, and for this, development of a positive electrode slurry composition including a binder not affected by reaction of nickel to moisture is required.

[Prior Art Document]

[Patent Document]

(Patent Document 1) Korean Patent Laid-Open Publication No. 2016-0039835

### DISCLOSURE OF THE INVENTION

## TECHNICAL PROBLEM

To solve the above problems, a first technical task of the present invention is to provide a positive electrode slurry composition capable of suppressing gelation of a binder caused by moisture in the air to prevent deterioration of electrochemical performance of a battery.

A second technical task of the present invention is to provide a positive electrode for a lithium secondary battery including the positive electrode slurry composition.

A third technical task of the present invention is to provide a lithium secondary battery including the positive electrode for a lithium secondary battery.

## TECHNICAL SOLUTION

[1] The present invention provides a positive electrode slurry composition including a lithium transition metal oxide containing nickel; and a polyamide-based binder, wherein the polyamide-based binder includes a polyamide-based polymer containing an aliphatic structure and an aromatic structure on a main chain, and containing one or more selected from the group consisting of a carbonyl group, a carboxy group, and an ester group as a functional group on a side chain, the polyamide-based polymer includes the aromatic structure in an amount of 90 mol% to 99 mol% relative to the total number of moles of a repeating unit of the polymer, and the polyamide-based polymer includes the functional group in an amount of 0.005 mol% to 1 mol% on the basis of the total number of moles of the polymer.

[2] The present invention provides the positive electrode slurry composition of [1] above, wherein the polyamide-based polymer includes the aliphatic structure in an amount of 1 mol% to 10 mol% relative to the total number of moles of a repeating unit of the polymer.

[3] The present invention provides the positive electrode slurry composition of any one or more of [1] or [2] above, wherein the aromatic structure includes a repeating unit represented by Formula 1 below:

[Formula 1] $-[NH-A_1-NHCO-A_2-CO]-$

In Formula 1 above, $A_1$ and $A_2$ are each independently a divalent organic group including an aromatic ring.

[4] The present invention provides the positive electrode slurry composition of [3] above, wherein $A_1$ and $A_2$ above are each independently any one selected from Formula 1- 1 to Formula 1-5 below:

[Formula 1-1]

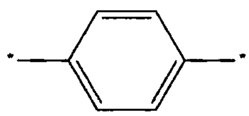

[Formula 1-2]

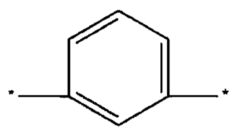

[Formula 1-3]

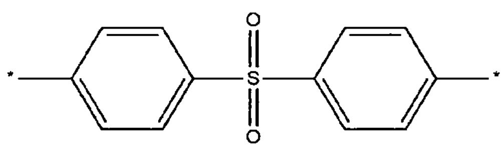

[Formula 1-4]

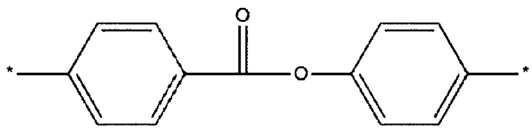

[Formula 1-5]

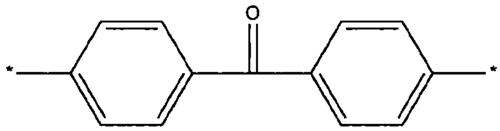

In Formula 1-1 to Formula 1-5 above, * is a bonding site.

[5] The present invention provides the positive electrode slurry composition of any one or more of [1] to [4] above, wherein the aliphatic structure includes a repeating unit represented by Formula 2 below:

[Formula 2] $-[NH-B_1-NHCO-B_2-CO]-$

In Formula 2 above, $B_1$ and $B_2$ are each independently a divalent aliphatic organic group.

[6] The present invention provides the positive electrode slurry composition of [5] above, wherein $B_1$ and $B_2$ above are each independently an alkylene group having 2 to 50 carbon atoms.

[7] The present invention provides the positive electrode slurry composition of any one or more of [1] to [6] above, wherein the polyamide-based polymer has a weight-average molecular weight of 100,000 g/mol to 1,000,000 g/mol.

[8] The present invention provides the positive electrode slurry composition of any one or more of [1] to [7] above, wherein the polyamide-based binder has an adsorption amount of 6.5 mg/g or less for the positive electrode active material.

[9] The present invention provides the positive electrode slurry composition of any one or more of [1] to [8] above, wherein the positive electrode slurry does not include polyvinylidene fluoride (PVdF).

[10] The present invention provides the positive electrode slurry composition of any one or more of [1] to [9] above, wherein the positive electrode slurry composition further includes a conductive material.

[11] The present invention provides the positive electrode slurry composition of [10] above, wherein the positive electrode slurry composition includes the lithium transition metal oxide in an amount of 86 wt% to 99.6 wt%, the conductive material in an amount of 0.1 wt% to 10 wt%, and the polyamide-based binder in an amount of 0.1 wt% to 10 wt% on the basis of the total weight of the total solid content.

[12] The present invention provides the positive electrode slurry composition of any one or more of [1] to [11] above, wherein an amount of Ni, among transition metals, is 50 mol% or greater in the lithium transition metal oxide.

[13] The present invention provides the positive electrode slurry composition of any one or more of [1] to [12] above, wherein the lithium transition metal oxide is represented by Formula 3 below:

[Formula 3] $Li_{1+x}(Ni_aCo_bMn_c)_{1-x}O_2$

In Formula 3 above, $-0.3 \leq x \leq 0.3$, $0.5 \leq a < 1$, $0 < b \leq 0.3$, $0 < c \leq 0.3$, and $a+b+c=1$.

[14] The present invention provides the positive electrode slurry composition of any one or more of [1] to [13] above, wherein a solid content of the positive electrode slurry composition is 50 wt% to 80 wt% on the basis of the total weight of the positive electrode slurry composition.

[15] The present invention provides the positive electrode slurry composition of any one or more of [1] to [14] above, wherein the positive electrode slurry composition has a difference of 20% or less between an initial viscosity and a viscosity measured after being left for 7 days in an environment with a relative humidity of 30% or greater.

[16] The present invention provides a positive electrode for a lithium secondary battery including a positive electrode current collector, and the positive electrode slurry composition, according to any one or more of [1] to [15] above, applied onto at least one side of the positive electrode current collector.

[17] The present invention provides a lithium secondary battery including the positive electrode for a lithium secondary battery according to [16] above.

## Advantageous Effects

A positive electrode active material composition according to the present invention includes a polyamide-based binder containing an aliphatic structure and an aromatic structure on a main chain and containing one or more selected from the group consisting of a carbonyl group, a carboxy group, and an ester group as a functional group on a side chain, thereby preventing gelation of the polyamide-based binder despite a nickel-containing lithium transition metal oxide being included. Therefore, in a case where the positive electrode slurry including the polyamide-based binder is used for preparation of an electrode, reduction in electrode uniformity may be suppressed, so that adhesion may be maintained, and thus more stable electrochemical performance may be exhibited, and therefore, it may be useful in preparation of a lithium secondary battery.

## BRIEF DESCRIPTION OF THE DRAWINGS

FIG. 1 is a graph showing the viscosity change over time in an environment with 100% humidity for positive electrode slurry compositions prepared according to Example 1 and Comparative Example 1 of the present invention.

## MODE FOR CARRYING OUT THE INVENTION

Hereinafter, the present invention will be described in more detail.
It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

## Positive Electrode Slurry Composition

A positive electrode slurry composition according to an embodiment of the present invention includes a lithium transition metal oxide containing nickel; and

a polyamide-based binder,
the polyamide-based binder includes a polyamide-based polymer containing an aliphatic structure and an aromatic structure on a main chain, and containing one or more selected from the group consisting of a carbonyl group, a carboxy group, and an ester group as a functional group on a side chain, the polyamide-based polymer includes the aromatic structure in an amount of 90 mol% to 99 mol% relative to the total number of moles of a repeating unit of the polymer, and the polyamide-based polymer includes the functional group in an amount of 0.005 mol% to 1 mol% on the basis of the total number of moles of the polymer.

Since the positive electrode slurry composition includes the polyamide-based binder containing the polyamide-based polymer containing an aliphatic structure and an aromatic structure on a main chain and containing one or more selected from the group consisting of a carbonyl group, a carboxy group, and an ester group as a functional group on a side chain, binder gelation, occurring when a conventional polyvinylidene fluoride (PVdF) is used, may be prevented. That is, even in a case where nickel, included in a nickel-containing lithium transition metal oxide, reacts with moisture in the air to form a hydroxy group and increase pH of the positive electrode slurry composition, the aliphatic structure included in the polyamide-based binder does not interact with the hydroxy group, so that the gelation does not occur in the positive electrode slurry composition containing the polyamide-based binder. In addition, since the gelation does not occur in the positive electrode slurry composition containing the polyamide-based binder, uniformity of an electrode may be improved when the electrode is prepared by using this, thereby improving electrochemical performance of a secondary battery.
In the polyamide-based polymer, the aliphatic structure and the aromatic structure may be connected by an amide bond, a substituted position of the functional group may be, for example, any one or more among the aliphatic structure and the aromatic structure on the main chain or the end portion of the polyamide-based binder, and the functional group may be included in the side chain. In that the aliphatic structure and the aromatic structure are connected by the amide bond, the polyamide-based polymer is different from a polyamide binder mixture where aliphatic polyamide and aromatic polyamide are simply mixed. In case of the polyamide binder mixture in which aliphatic polyamide and aromatic polyamide are simply mixed, due to binding characteristics of the binder, the binder may partially aggregate when applied to a positive electrode slurry composition, and due to the aggregation of the binder, uniformity of an electrode may be reduced when the positive electrode slurry composition is applied to a positive electrode current collector.
The polyamide-based polymer may include the aromatic structure in an amount of 90 mol% to 99 mol% on the

basis of the sum of the aliphatic structure and the aromatic structure, and particularly, on the basis of the total number of moles of a repeating unit of the polymer. In addition, particularly, the aromatic structure may be included in an amount of 92 mol% to 98 mol%, and more particularly, 93 mol% to 97 mol%.

When the polyamide-based polymer includes the aromatic structure in the above amount range, the binder may have an increased modulus, which may be helpful for improvement in cycle performance of a lithium secondary battery including the same. When the amount of the aromatic structure is less than the above range, the effect of increasing modulus of the binder may not be expected, and when the amount of the aromatic structure is greater than the above range, the slurry viscosity of the binder may increase excessively.

The polyamide-based polymer may include the aliphatic structure in an amount of 1 mol% to 10 mol%, particularly 2 mol% to 8 mol%, and more particularly 3 mol% to 7 mol% relative to the total number of moles of a repeating unit of the polymer. When the amount of the aliphatic structure included in the polyamide-based polymer falls within the above range, the slurry viscosity is in an appropriate level, so that phase separation may not occur, and effect of improving brittleness of the prepared positive electrode may be exhibited.

The polyamide-based polymer may include the aliphatic structure and the aromatic structure on the main chain, and therefore, the amount of the aliphatic structure and the amount of the aromatic structure may represent the mole fraction of a structure that forms the main chain of the polyamide-based polymer.

The polyamide-based polymer may include the functional group in an amount of 0.005 mol% to 1 mol%, particularly, 0.01 mol% to 0.5 mol%, and more particularly, 0.01 mol% to 0.3 mol% on the basis of the total number of moles of the polymer.

In a case where the polyamide-based polymer includes only the aliphatic structure and the aromatic structure, adhesive strength for an electrode may be low, requiring an additional functional group being included on the side chain, and in case of including the functional group in the above range, the polyamide-based binder including the polyamide-based polymer may have appropriate adhesive strength for the electrode. When the amount of the functional group is less than the above range, it may be difficult to have the appropriate level of adhesive strength for the electrode, and when the amount of the functional group is greater than the above range, electrolyte solution affinity may increase to cause easy swelling of the binder in a battery, thereby decreasing physical binding strength. Accordingly, a positive electrode active material may also be isolated to cause decrease in capacity and increase in resistance, thereby deteriorating output and rate characteristics.

The polyamide-based polymer included in the polyamide-based binder, according to the present invention, may have a weight-average molecular weight of 100,000 g/mol to 1,000,000 g/mol, particularly 200,000 g/mol to 800,000 g/mol, and more particularly 400,000 g/mol to 800,000 g/mol. When the weight-average molecular weight of the polyamide-based polymer is low, the viscosity of the positive electrode slurry composition may decrease to cause phase separation, it may be difficult to disperse the positive electrode active material sufficiently, and adhesion effect between an electrode layer and a current collector may decrease, and when the weight-average molecular weight of the polyamide-based polymer is high, since the resistance of the electrode layer increases in the positive electrode slurry composition, output characteristics may become poor, and phase stability of the slurry moves to a high-elasticity region, thereby deteriorating uniformity in electrode quality. At this time, the weight-average molecular weight may refer to a converted figure for a standard polystyrene, measured using gel permeation chromatography (GPC). For example, a sample at a certain concentration is prepared, and then a GPC measurement instrument is stabilized. Once the instrument is stabilized, a standard sample and the sample are injected into the instrument to obtain a chromatogram, and then the molecular weight is calculated according to the analysis method.

<Measuring condition>

Measuring instrument: Agilent GPC (Agulent 1200 series, USA)
Column: 2 PL Mixed B columns connected.
Column temperature: 40 °C
Eluent: tetrahydrofuran
Flow rate: 1.0 mL/min
Concentration: ~ 1 mg/mL(100 μL injection)

The polyamide-based binder may have an adsorption amount of 6.5 mg/g or less for the positive electrode active material, particularly 0.1 mg/g to 5.0 mg/g, and more particularly 0.1 mg/g to 3.0 mg/g. In a case where the adsorption amount of the binder for the positive electrode active material increases, the viscosity change over time of the positive electrode slurry composition may increase. Since the polyamide-based binder of the present invention satisfies the adsorption amount in the above range for the positive electrode active material, the viscosity changes over time of the

positive electrode slurry composition including the same may be suppressed to a minimum.

The adsorption amount of the polyamide-based binder for the positive electrode active material may be obtained by a method of (1) adding the positive electrode active material and the polyamide-based binder to a dispersion medium to prepare a preliminary slurry, (2) taking a portion of the preliminary slurry to centrifuge and separate into a solid content and a supernatant liquid, and then (3) measuring the concentration of the binder in the supernatant liquid to calculate the adsorption amount of the binder adsorbed to the positive electrode active material.

A method for preparing the polyamide-based binder is not particularly limited as long as it is a method used for preparing a conventional polyamide-based polymer, and for example, the polyamide-based binder may be prepared through polymerization of a diamine compound and a polyfunctional carboxylic acid compound or a polyfunctional acyl halide compound. For example, the polyamide-based binder may be prepared by a method of adding an aliphatic diamine compound to a molten aromatic polyfunctional carboxylic acid compound and/or an aromatic polyfunctional acyl halide compound to induce condensation polymerization reaction, or a method of adding an aliphatic polyfunctional carboxylic acid compound and/or aliphatic polyfunctional acyl halide compound to a molten aromatic diamine compound to induce condensation polymerization reaction, but is not limited thereto.

The aromatic polyfunctional carboxylic acid compound may be an aromatic polyfunctional carboxylic acid compound including 8 to 20 carbon atoms substituted or unsubstituted with one or more selected from the group consisting of a carbonyl group, a carboxy group, and an ester group. The aromatic polyfunctional carboxylic acid compound may include one or more selected from the group consisting of, for example, terephthalic acid, isophthalic acid, 2-methylterephthalic acid, 2,5-dichloroterephthalic acid, 2,6-naphthalene dicarboxylic acid, 2,7-naphthalenedicarboxylic acid, 1,4-naphthalene dicarboxylic acid, 2,2'-byphenyl dicarboxylic acid, 4,4'-biphenyl dicarboxylic acid, 1,4-phenylenedioxyphenylene acid, 1,3-phenylenedioxy-diacetic acid, 4',4'-oxybisbenxoic acid, diphenylsulfone-4,4'-dicarboxylic acid, and 2,2'-byphenyl dicarboxylic acid, substituted or unsubstituted with one or more selected from the group consisting of a carbonyl group, a carboxy group, and an ester group.

The aliphatic dicarboxylic acid may be an aliphatic dicarboxylic acid including 4 to 14 carbon atoms substituted or unsubstituted with one or more selected from the group consisting of a carbonyl group, a carboxy group, and an ester group. The aliphatic dicarboxylic acid may be one or more selected from the group consisting of, for example, succinic acid, glutaric acid, adipic acid, heptanedioic acid, octanedioic acid, azelaic acid, and sebacic acid, undecanedioic acid, dodecanedioic acid, and 2-methylsuccinic acid, substituted or unsubstituted with one or more selected from the group consisting of a carbonyl group, a carboxy group, and an ester group.

In addition, the aromatic polyfunctional acyl halide compound may be an aromatic polyfunctional acyl halide compound including 8 to 20 carbon atoms substituted or unsubstituted with one or more selected from the group consisting of a carbonyl group, a carboxy group, and an ester group. The aromatic polyfunctional acyl halide compound may include one or more selected from the group consisting of, for example, trimesic acid chloride, terephthalic acid chloride, isophthalic acid chloride, biphenyl dicarboxylic acid chloride, and naphthalene dicarboxylic acid dichloride, substituted or unsubstituted with one or more selected from the group consisting of a carbonyl group, a carboxy group, and an ester group.

The aromatic diamine compound may be an aromatic diamine compound including 8 to 20 carbon atoms substituted or unsubstituted with one or more selected from the group consisting of a carbonyl group, a carboxy group, and an ester group. The aromatic diamine compound may include one or more selected from the group consisting of, for example, 1,4-phenylenediamine, 1,3-phenylenediamine, 2,5-diaminotuluene, diphenyldiamine, 4-methoxyphenylenediamine, methylenedianiline, piperazine, triaminobenzene, m-xylenediamine, p-xylenediamine, and bis(4-aminophenyl) propane, substituted or unsubstituted with one or more selected from the group consisting of a carbonyl group, a carboxy group, and an ester group.

The aliphatic diamine compound may be aliphatic diamine including 2 to 14 carbon atoms substituted or unsubstituted with one or more selected from the group consisting of a carbonyl group, a carboxy group, and an ester group. The aliphatic diamine compound may include one or more selected from the group consisting of, for example, 1,2-ethanediamine, 1,4-butane diamine, 1,5-pentane diamine, 1,6-hexamethylene diamine, 1,8-octane diamine, 1,9-nonamethylene diamine, 1,10-decamethylene diamine, 1,11-hendecane diamine, 1,12-dodecane diamine, 2-methyl-1,5-pentamethylene diamine, 3-methyl-1,5-pentamethylene diamine, 2,4-dimethyl-1,6-hexamethylene diamine, 2,2,4-trimethyl-1,6-hexamethylene diamine, 2,4,4-trimethyl-1,6-hexamethylene diamine, 2-methyl-1,8-octane diamine, 5-methyl-1,9-nonamethylene diamine, cyclohexane diamine, methyl cyclohexane diamine, and 4,4'-diaminodicyclohexyl methane, substituted or unsubstituted with one or more selected from the group consisting of a carbonyl group, a carboxy group, and an ester group.

According to an embodiment of the present invention, the aromatic structure may include a repeating unit represented by Formula 1 below.

[Formula 1] $-[NH-A_1-NHCO-A_2-CO]-$

In Formula 1 above, $A_1$ and $A_2$ are each independently a divalent organic group including an aromatic ring.

According to an embodiment of the present invention, $A_1$ and $A_2$ above may be each independently any one selected from Formula 1-1 to Formula 1-5 below.

[Formula 1-1]

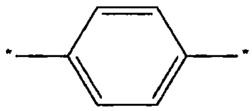

[Formula 1-2]

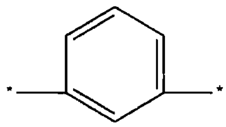

[Formula 1-3]

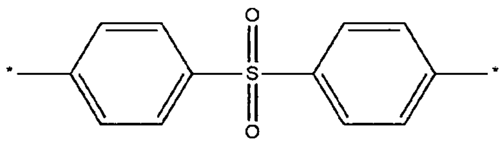

[Formula 1-4]

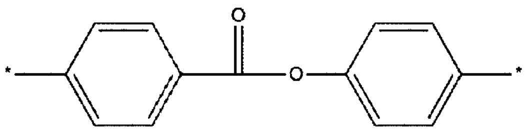

[Formula 1-5]

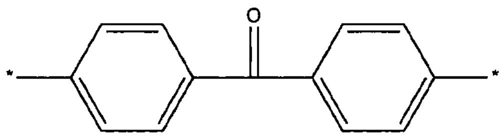

In Formula 1-1 to Formula 1-5 above, * is a bonding site.

In Formula 1 above, $A_1$ above may be any one divalent organic group selected from Formula 1-1 or Formula 1-2.

In Formula 1 above, $A_2$ above may be any one divalent organic group selected from Formula 1-3 to Formula 1-5.

According to an embodiment of the present invention, the aliphatic structure may include a repeating unit represented by Formula 2 below.

[Formula 2] $-[NH-B_1-NHCO-B_2-CO]-$

In Formula 2 above, $B_1$ and $B_2$ are each independently a divalent aliphatic organic group.

According to an embodiment of the present invention, $B_1$ and $B_2$ above may be each independently an alkylene group having 2 to 50 carbon atoms. $B_1$ and $B_2$ above may be each independently $-(CH_2)n-$, where the range of n may be $2 \leq n \leq 50$, $2 \leq n \leq 20$, or $2 \leq n \leq 10$.

In addition, the nickel-containing lithium transition metal oxide, included in the positive electrode slurry composition according to the present invention, may be selected from the group consisting of a lithium-nickel-based oxide, a lithium-nickel-manganese-based oxide, a lithium-nickel-cobalt-based oxide, and a lithium-nickel-manganese-cobalt-based oxide, and particularly, may include at least one selected from $Li_{1+x}(Ni_aCo_bMn_c)_{1-x}O_2$ ($0<a<1$, $0<b<1$, $0<c<1$,

- 0.3≤x≤0.3, and a+b+c=1), $Li(Ni_dCo_cMn_f)O_4$ (0<d<2, 0<e<2, 0<f<2, and d+e+f=2), $Li_gNiO_2$ (0.5<g<1.3), $LiNi_{1-h}M_hO_2$ (M=Co, Mn, Al, Cu, Fe, Mg, B, or Ga, and 0≤h<1), $LiMn_{2-y}Ni_yO_4$ (0<y<2), and $LiMn_{2-z}Co_zO_4$ (0<Z<2).

Preferably, the lithium transition metal oxide may include a lithium transition metal oxide which is represented by Formula 3 below, and which contains Ni in an amount of 50% or greater, 60% or greater, and preferably 75% or greater.

[Formula 3] $Li_{1+x}(Ni_aCo_bMn_c)_{1-4}O_2$

In Formula 3 above,

$$-0.3 \leq x \leq 0.3,$$

0.5≤a<1, 0<b≤0.3, 0<c≤0.3, and a+b+c=1.

In addition, in Formula 3 above, -0.3≤x≤0.3, 0.7≤a<1, 0<b≤0.2, 0<c≤0.2, and a+b+c=1 may be satisfied, particularly, -0.3≤x≤0.3, 0.8≤a<1, 0<b<0.2, 0<c<0.2, and a+b+c=1 may be satisfied, and more particularly, -0.3≤x≤0.3, 0.9≤a<1, 0<b<0.1, 0<c<0.1, and a+b+c=1 may be satisfied.

As previously described, when the lithium transition metal oxide having nickel in the amount of 50% or greater is used as the lithium transition metal oxide, high-capacity characteristics may be exhibited, but on the contrary, as the nickel amount increases in the lithium transition metal oxide, generation of a hydroxy group, due to reaction between the nickel and moisture in the air, may also increase. Accordingly, as the nickel amount included in the lithium transition metal oxide is larger, gelation of the composition for forming a positive electrode including the same may be accelerated. When the polyamide-based binder is applied, as a binder, to a lithium transition metal oxide having a high content of nickel, the aliphatic structure included in the polyamide-based binder may not interact with a hydroxy group generated due to the reaction between the nickel, included in the lithium transition metal oxide, and moisture in the air, thereby suppressing the gelation despite the increased generation of the hydroxy group.

Therefore, the positive electrode slurry composition of the present invention may include the lithium transition metal oxide having a high content of nickel, together with the polyamide-based binder.

The positive electrode slurry composition may be prepared in a method generally known in the relevant art. For example, the nickel-containing lithium transition metal oxide as a positive electrode active material, the polyamide-based binder according to the present invention, a solvent, and optionally a conductive material and/or a dispersant may be mixed and agitated to prepare the positive electrode slurry composition.

For example, on the basis of the total weight of the entire solid content, the positive electrode slurry composition may include the lithium transition metal oxide in an amount of 85 wt% to 99.6 wt%, the conductive material in an amount of 0.1 wt% to 10 wt%, and the polyamide-based binder in an amount of 0.1 wt% to 10 wt%, particularly, the lithium transition metal oxide in an amount of 90.0 wt% to 98.7 wt%, the conductive material in an amount of 0.3 wt% to 5.0 wt%, the polyamide-based binder in an amount of 1.0 to 5.0 wt%, and more particularly, the lithium transition metal oxide in an amount of 93.0 wt% to 98.7 wt%, the conductive material in an amount of 0.3 to 4.0 wt%, and the polyamide-based binder in an amount of 1.0 to 4.0 wt%, In a case where the amount of the polyamide-based binder included in the positive electrode slurry composition increases, adhesive strength may increase, but as the amount increases, the slurry viscosity may increase. Therefore, when the positive electrode slurry composition satisfies the above amount ranges of the lithium transition metal oxide, the conductive material, and the polyamide-based binder, respectively, the viscosity of the positive electrode slurry, and the coating property and adhesive strength for an electrode may be appropriately exhibited, and when satisfying the particular ranges, the viscosity of the positive electrode slurry, and the coating property and adhesive strength for the electrode may be more appropriately exhibited, and when satisfying the more particular ranges, the viscosity of the positive electrode slurry, and the coating property and adhesive strength for the electrode may be even more appropriately exhibited.

The solvent included in the positive electrode slurry composition may include an organic solvent such as N-methyl pyrrolidone (NMP), dimethyl formamide (DMF), acetone, and dimethyl acetamide, water, or the like, and such solvent may be used alone, or may also be used as a mixture of at least one or more thereof. The amount of solvent to be used is sufficient if it dissolves and disperses the positive electrode active material, the polyamide-based binder, and the conductive material in consideration of the slurry application thickness and manufacturing yield.

The conductive material is not particularly limited as long as it does not cause chemical change in the relevant battery and has conductivity, and for example, the conductive material includes a material having conductivity in a dotted, linear, and plate-like shape. For example, graphite such as natural graphite or artificial graphite; carbon black including acetylene black, ketjen black, channel black, furnace black, lamp black, thermal black, etc.; a conductive fiber such as a carbon fiber or a metal fiber; a conductive tube such as a carbon nanotube; fluorocarbon, metal powder such as aluminum powder or nickel powder; a conductive whisker including zinc oxide, potassium titanate, etc.; a conductive metal oxide such as titanium oxide; and a conductive material such as a polyphenylene derivative.

As the dispersant, an aqueous dispersant or an organic dispersant such as N-methyl-2-pyrrolidone may be selectively used as needed.

The positive electrode slurry composition according to the present invention may include a solid content of 50 wt% to 80 wt%, preferably 60 wt% to 70 wt%, and more preferably 65 wt% to 70 wt% on the basis of the total weight of the positive electrode slurry composition. For example, when the positive electrode slurry composition includes a solid content of 50 wt% to 80 wt% on the basis of the total weight of the positive electrode slurry composition, when the solid content of the positive electrode slurry composition is less than 50 wt% on the basis of the total weight of the positive electrode slurry composition, a thick electrode with a certain thickness or larger may not be prepared, and in case of preparing the thick electrode, the number of current collectors needs to be increased, so that there is a risk of increasing costs for preparing a cell. On the contrary, when the solid content of the positive electrode slurry composition is greater than 80 wt% on the basis of the total weight of the positive electrode slurry composition, the slurry composition is difficult to be applied evenly onto the current collector, and thus a separate equipment needs to be used to disperse the slurry composition on a current collector, or the slurry composition needs to be applied onto another support and then transcribed onto the current collector, also causing a risk of increasing costs.

The positive electrode slurry composition according to the present invention may be prepared in the air, and even though the nickel-containing lithium transition metal oxide, included in the positive electrode slurry composition, reacts with moisture in the air to form a hydroxy group and increase pH, as the above-described polyamide-based binder is included, gelation of the positive electrode slurry composition may be suppressed, and accordingly, the viscosity of the positive electrode slurry composition may not increase.

In particular, the positive electrode slurry composition, prepared by mixing the lithium transition metal oxide, the polyamide-based binder, and the conductive material, may have a difference of 20% or less between the initial viscosity and a viscosity measured after being left for 7 days in a harsh environment with a relative humidity of 30% or greater, or 50% or greater, particularly a relative humidity of 80% to 100%, and particularly, the difference in viscosity may be 15% or less, and more particularly, 10% or less. At this time, the viscosity is measured at 25 °C and 12 rpm using a B-type viscometer of Brookfield.

That is, also in a case where the positive electrode slurry composition according to the present invention is prepared, and then left for 7 days in a harsh environment with a relative humidity of 80% or greater, and particularly a relative humidity of 80% to 100%, the viscosity barely increases, compared to the viscosity measured immediately after the positive electrode slurry composition is prepared, and therefore, a positive electrode layer may be maintained more evenly when the positive electrode is prepared by using this, thereby preventing problems such as reduction in positive electrode capacity and reduction in output.

The environment with a relative humidity of 80% or greater refers to an environment with a relative humidity of 80% or greater regardless of a particular temperature, as long as the temperature is generally allowed during a process of preparing the positive electrode slurry composition. For example, the relative humidity may be a relative humidity measured at a temperature for preparing a general positive electrode slurry composition, and the temperature may be room temperature, and particularly 25 °C.

## Positive Electrode for Secondary Battery

Meanwhile, the present invention provides a positive electrode for a lithium secondary battery including a positive electrode current collector, and the positive electrode slurry composition applied onto at least one side of the positive electrode current collector.

The positive electrode current collector is not particularly limited as long as it does not cause chemical change to a battery and has conductivity, and for example, stainless-steel, aluminum, nickel, titanium, a conductive polymer, carbon paper, calcined carbon, aluminum or stainless-steel that is surface-treated with carbon, nickel, titanium, silver, a conductive polymer, etc. may be used. In addition, the positive electrode current collector may generally have a thickness of 3 to 500 μm, and microscopic irregularities may be formed on a surface of the current collector to improve the adhesion of the positive electrode active material. For example, the positive electrode current collector may be used in various forms including a film, a sheet, a foil, a net, a porous body, a foam body, a non-woven fabric body, wire, a pin, etc.

The positive electrode may be prepared according to a general preparation method for a positive electrode, except that the above-described positive electrode active material slurry composition is used. Particularly, the positive electrode current collector is applied (coated) with the above-described positive electrode slurry composition, and then dried and pressed to prepare the positive electrode. For example, the drying of the electrode may be performed at a temperature range of 60 °C to 130 °C.

Also, in another method, casting of the positive electrode slurry composition may also be performed on a separate support, and a film separated from the support may then be laminated onto the positive electrode current collector to thereby prepare the positive electrode.

**Lithium secondary battery**

In addition, according to the present invention, an electro-chemical device including the positive electrode may be prepared. The electro-chemical device may be, particularly, a battery, a capacity, etc., and more particularly a lithium secondary battery.

The lithium secondary battery includes, particularly, a positive electrode, a negative electrode opposed to the positive electrode, a separator disposed between the positive electrode and the negative electrode, and an electrolyte, and the positive electrode is the same as previously described. In addition, the lithium secondary battery may optionally further include a battery case that accommodates an electrode assembly of the positive electrode, the negative electrode, and the separator, and a sealing member that seals the battery case.

In the lithium secondary battery, the negative electrode includes a negative electrode current collector and a negative electrode active material layer positioned on the negative electrode current collector.

The negative electrode current collector is not particularly limited as long as it does not cause chemical change in a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. Also, the negative electrode current collector may generally have a thickness of 3 $\mu$m to 500 $\mu$m, and like the positive electrode current collector, microscopic irregularities may be formed on a surface of the current collector to strengthen the adhesion of the negative electrode active material. For example, the current collector may be used in various forms including a film, a sheet, a foil, a net, a porous body, a foam body, a non-woven fabric body, etc.

The negative electrode active material layer includes a binder and a conductive material optionally, together with the negative electrode active material.

A compound capable of reversible intercalation and deintercalation of lithium may be used as the negative electrode active material. Specific examples may include a carbon-based material including artificial graphite, natural graphite, graphitized carbon fiber, amorphous carbon, etc.; a metal-based compound capable of alloying with lithium including Si, Al, Sn, Pb, Zn, Bi, In, Mg, Ga, Cd, Si alloy, Sn alloy, or Al alloy, etc.; a metal oxide capable of doping or dedoping lithium such as $SiO_\beta(0<\beta<2)$, $SnO_2$, vanadium oxide, and lithium vanadium oxide; or a composite containing the metal-based compound and the carbon-based material such as a Si-C composite or a Sn-C composite, and any one or a mixture of two or more thereof may be used. In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include amorphous, plate-shaped, scaly, spherical, or fibrous natural graphite or artificial graphite, kish graphite, pyrolytic carbon, mesophase pitch-based carbon fiber, meso-carbon microbeads, and mesophase pitches, and high-temperature calcined carbon such as petroleum or coal tar pitch derived cokes.

The binder is a component that helps binding between the conductive material, the active material, and the current collector, and generally is included in an amount of 0.1 wt% to 10 wt% on the basis of the total weight of the negative electrode active material layer. Examples of this binder may include polyvinylidene fluoride (PVDF), polyvinyl alcohol, carboxymethyl cellulose (CMC), sodium carboxymethyl cellulose, starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, various copolymers thereof, etc.

The conductive material is a component that further improves conductivity of the negative electrode active material, and may be added in the amount of 10 wt% or less, and preferably 5 wt% or less on the basis of the total weight of the negative electrode active material layer. The conductive material may not be particularly limited as long as it does not cause chemical change in the relevant battery and has conductivity, and for example, graphite such as natural graphite or artificial graphite; carbon black including acetylene black, ketjen black, channel black, furnace black, lamp black, thermal black, etc.; a conductive fiber including a carbon fiber, metal fiber, or the like; fluorocarbon, metal powder including aluminum power, nickel powder, etc.; a conductive whisker including zinc oxide, potassium titanate, etc.; a conductive metal oxide such as titanium oxide; a conductive material such as a polyphenylene derivative, etc. may be used.

For example, the negative electrode active material, and the binder and the conductive material may be dissolved or dispersed in a solvent to prepare a composition for forming a negative electrode active material layer, then the composition may be applied onto the negative electrode current collector and dried to prepare the negative electrode active material layer, or casting of the composition for forming the negative electrode active material layer is performed onto a separate support, and a film separated from the support may then be laminated on the negative electrode current collector to thereby prepare the negative electrode active material layer.

Meanwhile, in the lithium secondary battery, the separator separates the negative electrode and the positive electrode, and provides a movement path of lithium ions, any separator generally used for a lithium secondary battery may be used without particular limitation, and particularly, a separator having low resistance to ion movement in an electrolyte and having excellent electrolyte solution moisture-absorbing ability is preferred. In particular, a porous polymer film, for

example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, polyethylene terephthalate fiber, etc. may also be used. Furthermore, a coated separator including a ceramic component or a polymer material may also be used in order to secure heat resistance or mechanical strength, and may be selectively used in a single-layer or multi-layer structure.

In addition, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and is not limited thereto.

In particular, the electrolyte may include an organic solvent and a lithium salt.

Any organic solvent may be used as the organic solvent, without particular limitation, as long as it may function as a medium through which ions involved in an electrochemical reaction of the battery may move. In particular, as the organic solvent, an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethylcarbonate (DMC), diethylcarbonate (DEC), methylethylcarbonate (MEC), ethylmethylcarbonate (EMC), ethylenecarbonate (EC), or propylene carbonate (PC); an alcohol-based solvent such as ethylalcohol or isopropyl alcohol; nitriles such as R-CN (where, R is a linear, branched, or cyclic C2 to 20 hydrocarbon group, and may include a double-bond aromatic ring or an ether bond); amides such as dimethylformamide; dioxolanes such as 1,3-dioxolane; or sulfolanes may be used. Among these, a carbonate-based solvent is preferred, and a mixture of a cyclic carbonate (for example, ethylene carbonate, propylene carbonate, or the like) having high ionic conductivity and high permittivity capable of increasing charging and discharging performance of a battery, and a low-viscosity linear carbonate-based compound (for example, ethylmethyl carbonate, dimethyl carbonate, diethyl carbonate, or the like) is more preferred. In this case, when cyclic carbonate and chain carbonate may be mixed in a volume ratio of about 1:1 to about 1:9, performance of an electrolyte solution may be excellent.

Any compound capable of providing lithium ions that are used in a lithium secondary battery may be used as the lithium salt without particular limitation. In particular, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$, or the like may be used. The lithium salt may be used in a concentration range of 0.1 to 2.0 M. When the concentration of lithium salt falls within the above ranges, the electrolyte may have appropriate conductivity and viscosity, and therefore, excellent performance of the electrolyte may be exhibited, and lithium ions may move effectively.

In addition to the electrolyte components, at least one additive, for example, a halo-alkylene carbonate-based compound such as difluoroethylene carbonate, pyridine, triethylphosphite, triethanolamine, cyclic ether, ethylenediamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in order to improve lifetime characteristics of the battery, suppress the reduction in battery capacity, and improve discharge capacity of the battery. At this time, the additive may be included in the amount of 0.1 to 5 wt% on the basis of the total weight of the electrolyte.

As previously described, since the lithium secondary battery including the positive electrode active material, according to the present invention, stably exhibits excellent discharge capacity, output characteristics, and capacity retention rate, it is useful in the field of mobile devices, such as a mobile phone, a laptop computer, and a digital camera, and in the field of electric vehicles such as a hybrid electric vehicle (HEV).

Therefore, according to another embodiment of the present invention, a battery module including the lithium secondary battery as a unit cell and a battery pack including the battery module are provided.

The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

An outer shape of the lithium secondary battery of the present invention is not particularly limited, but may include a cylindrical type using a can, a prismatic type, a pouch type, a coin type, or the like.

The lithium secondary battery according to the present invention may not only be used in a battery cell that is used as a power source of a small device, but may also be preferably used as a unit battery in a medium and large-sized battery module including a plurality of battery cells.

Hereinafter, the present invention is described in detail through examples. However, the examples according to the present invention may be modified into various other forms, and the scope of the present invention should not be construed as being limited to the examples to be described in detail below. The examples of the present invention are provided to more completely explain the present invention to those with average knowledge in the art.

**<Example>**

**Example 1: Preparation of Positive Electrode Slurry Composition**

A polyamide polymer, which includes a repeating unit of Formula 1A below in an amount of 74.4 mol%, a repeating unit of Formula 1B below in an amount of 18.6 mol%, and a repeating unit of Formula 2A in an amount of 7 mol% among the total repeating units, and includes a functional group on a side chain in an amount of 0.2 mol%, was prepared.

[Formula 1A]

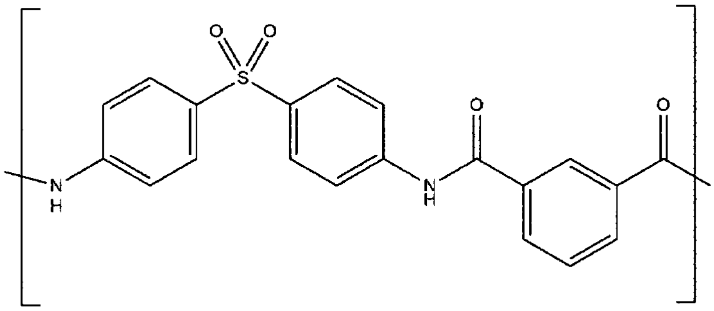

[Formula 1B]

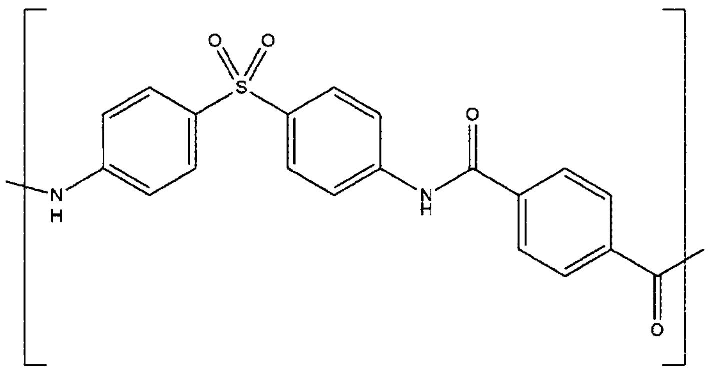

[Formula 2A] $-[NH-(CH_2)_6-NHCO-(CH_2)_6-CO]-$

$Li(Ni_{0.94}Co_{0.03}Mn_{0.03})O_2$, the polyamide-based binder, and CNT as a conductive material were added to NMP as a solvent in a weight ratio of 96:3:1, and agitated for 2 hours at 1500 rpm using a homo disper mixer at room temperature to prepare a positive electrode slurry composition. The positive electrode slurry composition had a solid content of 70 wt%.

**Example 2: Preparation of Positive Electrode Slurry Composition**

A positive electrode slurry composition was prepared in the same method as that of Example 1, except that $Li(Ni_{0.94}Co_{0.03}Mn_{0.03})O_2$, the polyamide-based binder, and CNT as a conductive material were added in a weight ratio of 90:5:5. The positive electrode slurry composition had a solid content of 70 wt%.

**Example 3: Preparation of Positive Electrode Slurry Composition**

A positive electrode slurry composition was prepared in the same method as that of Example 1, except that a polyamide polymer, including a repeating unit of Formula 1A in an amount of 77.6 mol%, a repeating unit of Formula 1B in an amount of 19.4 mol%, and a repeating unit of Formula 2A in an amount of 3 mol% among the total repeating units, and including a functional group on a side chain in an amount of 0.2 mol%, was prepared and used as a polyamide-based binder. The positive electrode slurry composition had a solid content of 70 wt%.

**Comparative Example 1: Preparation of Positive Electrode Slurry Composition**

A positive electrode slurry composition was prepared in the same method as that of Example 1 above, except that PVDF was used as a binder. The positive electrode slurry composition had a solid content of 70 wt%.

**Comparative Example 2: Preparation of Positive Electrode Slurry Composition**

A positive electrode slurry composition was prepared in the same method as that of Example 1, except that a polyamide polymer, including a repeating unit of Formula 1A in an amount of 68 mol%, a repeating unit of Formula 1B in an amount of 17 mol%, and a repeating unit of Formula 2A in an amount of 15 mol% among the total repeating units, and including a functional group on a side chain in an amount of 0.2 mol%, was prepared and used as a polyamide-based binder. The positive electrode slurry composition had a solid content of 70 wt%.

**Comparative Example 3: Preparation of Positive Electrode Slurry Composition**

A positive electrode slurry composition was prepared in the same method as that of Example 1, except that a polyamide polymer, including a repeating unit of Formula 1A in an amount of 80 mol%, and a repeating unit of Formula 1B in an amount of 20 mol% among the total repeating units, and including a functional group on a side chain in an amount of 0.2 mol%, was prepared and used as a polyamide-based binder. The positive electrode slurry composition had a solid content of 70 wt%.

**Comparative Example 4: Preparation of Positive Electrode Slurry Composition**

A polyamide polymer, which includes a repeating unit of Formula 1A in an amount of 74.4 mol%, a repeating unit of Formula 1B in an amount of 18.6 mol%, and a repeating unit of Formula 2A in an amount of 7 mol% among the total repeating units, and includes a functional group on a side chain in an amount of 0 mol%, was prepared. A positive electrode slurry composition was prepared in the same method as that of Example 1, except that this was used as a polyamide-based binder. The positive electrode slurry composition had a solid content of 70 wt%.

**Comparative Example 5: Preparation of Positive Electrode Slurry Composition**

A polyamide polymer, which includes a repeating unit of Formula 1A in an amount of 74.4 mol%, a repeating unit of Formula 1B in an amount of 18.6 mol%, and a repeating unit of Formula 2A in an amount of 7 mol% among the total repeating units, and includes a functional group on a side chain in an amount of 2 mol%, was prepared. A positive electrode slurry composition was prepared in the same method as that of Example 1, except that this was used as a polyamide-based binder. The positive electrode slurry composition had a solid content of 70 wt%.

**Experimental Example**

(1) Measurement of Adsorption Amount of Binder for Positive Electrode Active Material

The polyamide-based binders prepared according to Examples 1, 2, and Comparative Examples 2 to 5 above and PVdF were each prepared in 2 g. Each of the binders was added to a solvent (NMP) of 40 g with 2 g PVdF and 100g $Li(Ni_{0.95}Co_{0.03}Mn_{0.02})O_2$, and mixed and dispersed at room temperature, using a homo disper mixer, to prepare a slurry.

5 g of each slurry was taken to centrifugate at 20000 rpm for 30 minutes using a centrifuge (Supra R30 of Hanil Scientific Inc.) to separate each slurry into a solid content and a supernatant liquid.

Each of the supernatant liquids, obtained as above, was taken, and dried in an oven at 120 °C for 24 hours to obtain a polymer film. The weight of the polymer film was measured to calculate the amount of the solid content.

Amount of solid content (wt%) = polymer film (g) / supernatant liquid added (g) x 100 [Equation 1]

Using the amount of the solid content, the remaining amount of the binder in the supernatant liquid was calculated, then the calculated result was subtracted from the amount of the binder added, and the amount of the adsorbed binder (mg/g) with respect to 1 g positive electrode active material was calculated therefrom.

(2) Measurement of Viscosity of Positive Electrode Slurry Composition

The viscosity of the positive electrode slurry compositions, prepared according to Examples 1 to 3 and Comparative Examples 1 to 5 above, were measured using Rheometer MCR 302 of Anton Paar and measured at a shear rate of 2.5 (1/s) and at 25 °C. In addition, the positive electrode slurry compositions were each stored at 25 °C, and the viscosity was measured at 25 °C after 2 days. The measured viscosity results were listed in Table 1 below.

In addition, the viscosity changes over time of the positive electrode slurry compositions, prepared according to Example 1 and Comparative Example 1 above, were shown in FIG. 1.

In addition, the viscosity was further measured after 7 days for the positive electrode slurry compositions prepared according to Examples 1 and 2 and Comparative Example 1 above, and the viscosity changes after 7 days were calculated. The results were listed in Table 2 below.

(3) Measurement of Adhesive Strength and Evaluation on Coating property

The positive electrode slurries prepared according to Examples 1 to 3 and the positive electrode slurries prepared according to Comparative Examples 1 to 5 were each applied (25 mg/cm$^2$) onto a positive electrode current collector (Al thin film) having a thickness of 15 μm, and then dried and roll-pressed to prepared a positive electrode.

The prepared positive electrode was cut into a size of 150 mm length and 20 mm width, and a surface of the electrode was attached to a slide glass of 75 mm length and 25 mm width in a length direction using a double-sided tape. That is, the slide glass was attached to a region corresponding to a half of the positive electrode in the length direction. Then, a roller of 2 kg weight was rubbed 10 times so that the double-sided tape was attached uniformly, and a test sample was prepared therefrom. A slide glass portion of the test sample was fixed to a sample stage of a universal testing machine (UTM) (LF Plus, LLOYD privately manufactured), and a half part of the positive electrode not attached to the slide glass was connected to a load cell of the UTM machine. The load cell was moved up to 50 mm with a speed of 100 mm/min, and the weight applied to the load cell was measured. At this time, the minimum value of the weight measured at a 20 mm to 40 mm section of a moving section was measured as the electrode adhesive strength (gf/20 mm) of each sample. The evaluation was performed 5 times in total for each positive electrode to obtain the average value, and the average values were listed in Table 1 below.

In addition, when the positive electrode slurry was applied to the positive electrode current collector during the preparation process of the positive electrode, coating property of the positive electrode slurry was evaluated. If the coating of the positive electrode slurry was performed smoothly, it was rated as good, if the coating of the positive electrode slurry was possible to perform, but unevenness occurred on a positive electrode active material layer, it was rated as uneven, and if the coating of the positive electrode slurry was difficult to perform, it was rated as impossible.

[Table 1]

| Positive electrode slurry | Arom atic and alip hati c mola r rati o of bind er | Amoun t of funct ional group (mol% ) | Amount of binder in positi ve electr ode slurry (wt%) | Adsor ption amoun t of binde r (mg/g ) | Molecu lar weight of binder (g/mol ) | Initia l viscos ity of slurry (cP) | Visco sity of slurr y after 2 days (cP) | Elect rode coati ng prope rty | Adhe sive stre ngth (gf/ 20mm ) |
|---|---|---|---|---|---|---|---|---|---|
| Example 1 | 93:7 | 0.2 | 3 | 0.8 | 700,000 | 6,000 | 6,100 | Good | 32 |
| Example 2 | 93:7 | 0.2 | 5 | 0.8 | 700,000 | 12,000 | 15,000 | Good | 64 |
| Example 3 | 97:3 | 0.2 | 3 | 0.7 | 700,000 | 7,500 | 7,700 | Good | 25 |
| Comparative Example 1 | - | - | 3 | 9.0 | | 6,100 | 7,500 | Good | 28 |
| Compar ative Exampl e 2 | 85:5 | 0.2 | 3 | 0.1 | 700,00 0 | 3,000 | Phase separ ation | Impos sible | Impo ssib le to meas ure |

(continued)

| Positive electrode slurry | Aromatic and aliphatic molar ratio of binder | Amount of functional group (mol%) | Amount of binder in positive electrode slurry (wt%) | Adsorption amount of binder (mg/g) | Molecular weight of binder (g/mol) | Initial viscosity of slurry (cP) | Viscosity of slurry after 2 days (cP) | Electrode coating property | Adhesive strength (gf/ 20mm) |
|---|---|---|---|---|---|---|---|---|---|
| Comparative Example 3 | 100: 0 | 0.2 | 3 | 1.2 | 700,000 | 9,000 | 12,000 | Uneven | Impossible to measure |
| Comparative Example 4 | 93:7 | 0 | 3 | 0.3 | 700,000 | 6,000 | 5, 900 | Good | 12 |
| Comparative Example 5 | 93:7 | 2 | 3 | 1.5 | 700,000 | 12,000 | 24,500 | Uneven | 16 |

[Table 2]

| | Aromatic and aliphatic molar ratio of binder | Amount of functional group | Amount of binder in positive electrode slurry (wt%) | Initial viscosity of slurry (cP) | Viscosity of slurry after 2 days (cP) | Change in viscosity after 7 days (%) |
|---|---|---|---|---|---|---|
| Example 1 | 93:7 | 0.2 | 3 | 6,000 | 6,100 | 7 |
| Example 2 | 93:7 | 0.2 | 5 | 12,000 | 15,000 | -5 |
| Comparative Example 1 | PVdF | | 3 | 6,100 | 7,500 | 1,700 (after 4 days) |

The positive electrode slurry compositions according to Examples 1 to 3 had less increase in slurry viscosity over time, and exhibited good electrode coating properties and excellent adhesive strength.

On the contrary, the positive electrode slurry composition according to Comparative Example 1 had a viscosity significantly increasing after a certain period of time.

The positive electrode slurry according to Comparative Example 2 had a relatively less amount of aromatic structure of the polyamide-based polymer included in the polyamide-based binder, and the positive electrode slurry according to Comparative Example 2 had a phase separation occurred after 2 days, and due to the phase separation, the electrode coating was impossible.

The positive electrode slurry according to Comparative Example 3 did not include an aliphatic structure in the polyamide-based polymer included in the polyamide-based binder, and unevenness occurred during the electrode coating, so that the coating property was low, and accordingly, it was impossible to form a positive electrode active material layer in an appropriate level that allows the measurement of the electrode adhesive strength.

The positive electrode slurry according to Comparative Example 4 did not include a functional group in a side chain, and exhibited low adhesive strength without the functional group.

The positive electrode slurry according to Comparative Example 5 included the functional group in large amount on the side chain, and due to the large amount of the functional group, increase in viscosity over time was significant, and unevenness occurred during the electrode coating, so that the coating property was low, and accordingly, the level of increase in the adhesive strength was insufficient, compared to the amount of the functional group.

Meanwhile, when the adsorption amount of the binder for the positive electrode active material was measured, the polyamide-based binder included in the positive electrode slurry according to each of Examples 1 to 3 had a value of 0.7 mg/g and 0.8 mg/g, but the PVdF binder used in Comparative Example 1 had a value of 9.0 mg/g. It can be predicted that as the adsorption amount of the binder increases for the positive electrode active material, the viscosity change over time in the positive electrode slurry may be greater, which is the result consistent with the fact that the increase rate of viscosity

after 4 days was 1700% in Comparative Example 1.

When the change in the viscosity for 7 days was measured, in case of Example 1, the viscosity of the positive electrode slurry composition increased by about 7% or less, and in case of Example 2, the viscosity of the slurry increased after 2 days, but after 7 days, the viscosity decreased, and there was no clear trend in viscosity increase over time.

On the other hand, in case of Comparative Example 1, the viscosity of the positive electrode slurry composition increased by about 23% after 2 days, but the increase in the viscosity of the positive electrode slurry composition was up to 1700% after 4 days, so that it can be seen that the viscosity increased significantly over time. In case of such viscosity increase, it was impossible to transport or evenly apply the positive electrode slurry, and thus, the measurement of the viscosity change thereafter was stopped.

## Claims

**1.** A positive electrode slurry composition, comprising:

a lithium transition metal oxide comprising nickel; and
a polyamide-based binder,
wherein the polyamide-based binder comprises a polyamide-based polymer comprising an aliphatic structure and an aromatic structure on a main chain, and comprising one or more selected from the group consisting of a carbonyl group, a carboxy group, and an ester group as a functional group on a side chain,
the polyamide-based polymer comprises the aromatic structure in an amount of 90 mol% to 99 mol% relative to a total number of moles of a repeating unit of the polymer, and
the polyamide-based polymer comprises the functional group in an amount of 0.005 mol% to 1 mol% on the basis of a total number of moles of the polymer.

**2.** The positive electrode slurry composition of claim 1, wherein the polyamide-based polymer comprises the aliphatic structure in an amount of 1 mol% to 10 mol% relative to the total number of moles of the repeating unit of the polymer.

**3.** The positive electrode slurry composition of claim 1, wherein the aromatic structure comprises a repeating unit represented by Formula 1 below:

[Formula 1] $-[NH-A_1-NHCO-A_2-CO]-$

-where, in Formula 1 above, $A_1$ and $A_2$ are each independently a divalent organic group comprising an aromatic ring.

**4.** The positive electrode slurry composition of claim 3, wherein $A_1$ and $A_2$ above are each independently any one selected from Formula 1-1 to Formula 1-5 below:

[Formula 1-1]

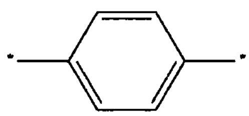

[Formula 1-2]

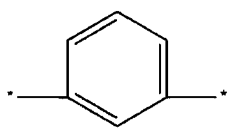

[Formula 1-3]

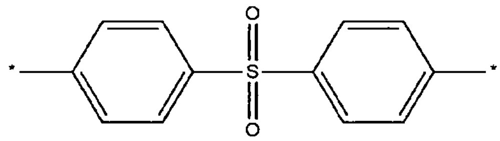

[Formula 1-4]

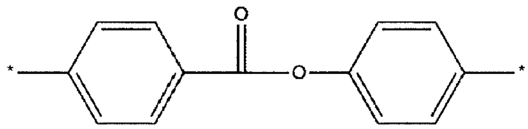

[Formula 1-5]

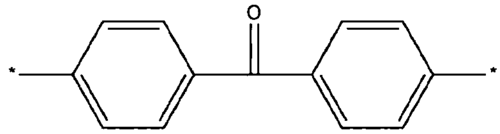

where, in Formula 1-1 to Formula 1-5 above, * is a bonding site.

**5.** The positive electrode slurry composition of claim 1, wherein the aliphatic structure comprises a repeating unit represented by Formula 2 below:

[Formula 2] $-[NH-B_1-NHCO-B_2-CO]-$

where, in Formula 2 above, $B_1$ and $B_2$ are each independently a divalent aliphatic organic group.

**6.** The positive electrode slurry composition of claim 5, wherein $B_1$ and $B_2$ above are each independently an alkylene group having 2 to 50 carbon atoms.

**7.** The positive electrode slurry composition of claim 1, wherein the polyamide-based polymer has a weight-average molecular weight of 100,000 g/mol to 1,000,000 g/mol.

**8.** The positive electrode slurry composition of claim 1, wherein the polyamide-based binder has an adsorption amount of 6.5 mg/g or less for the lithium transition metal oxide comprising nickel.

**9.** The positive electrode slurry composition of claim 1, wherein the positive electrode slurry does not comprise polyvinylidene fluoride (PVdF).

**10.** The positive electrode slurry composition of claim 1, wherein the positive electrode slurry composition further comprises a conductive material.

**11.** The positive electrode slurry composition of claim 10, wherein the positive electrode slurry composition comprises the lithium transition metal oxide in an amount of 85 wt% to 99.6 wt%, the conductive material in an amount of 0.1 wt% to 10 wt%, and the polyamide-based binder in an amount of 0.1 wt% to 10 wt% on the basis of a total weight of entire solid content.

**12.** The positive electrode slurry composition of claim 1, wherein an amount of Ni among transition metals is 50 mol% or greater in the lithium transition metal oxide.

**13.** The positive electrode slurry composition of claim 1, wherein the lithium transition metal oxide is represented by Formula 3 below:

[Formula 3] $Li_{1+x}(Ni_aCo_bMn_c)_{1-x}O_2$

where, in Formula 3 above,
$-0.3 \leq x \leq 0.3$, $0.5 \leq a < 1$, $0 < b \leq 0.3$, $0 < c = 20.3$, and $a+b+c=1$.

**14.** The positive electrode slurry composition of claim 1, wherein a solid content of the positive electrode slurry composition is 50 wt% to 80 wt% on the basis of a total weight of the positive electrode slurry composition.

**15.** The positive electrode slurry composition of claim 1, wherein the positive electrode slurry composition has a difference of 20% or less between an initial viscosity and a viscosity measured after being left for 7 days in an environment with a relative humidity of 30% or greater.

**16.** A positive electrode for a lithium secondary battery, comprising:

a positive electrode current collector; and
the positive electrode slurry composition, according to any one of claim 1 to claim 15, applied to at least one side of the positive electrode current collector.

**17.** A lithium secondary battery, comprising the positive electrode for a lithium secondary battery according to claim 16.

FIG. 1

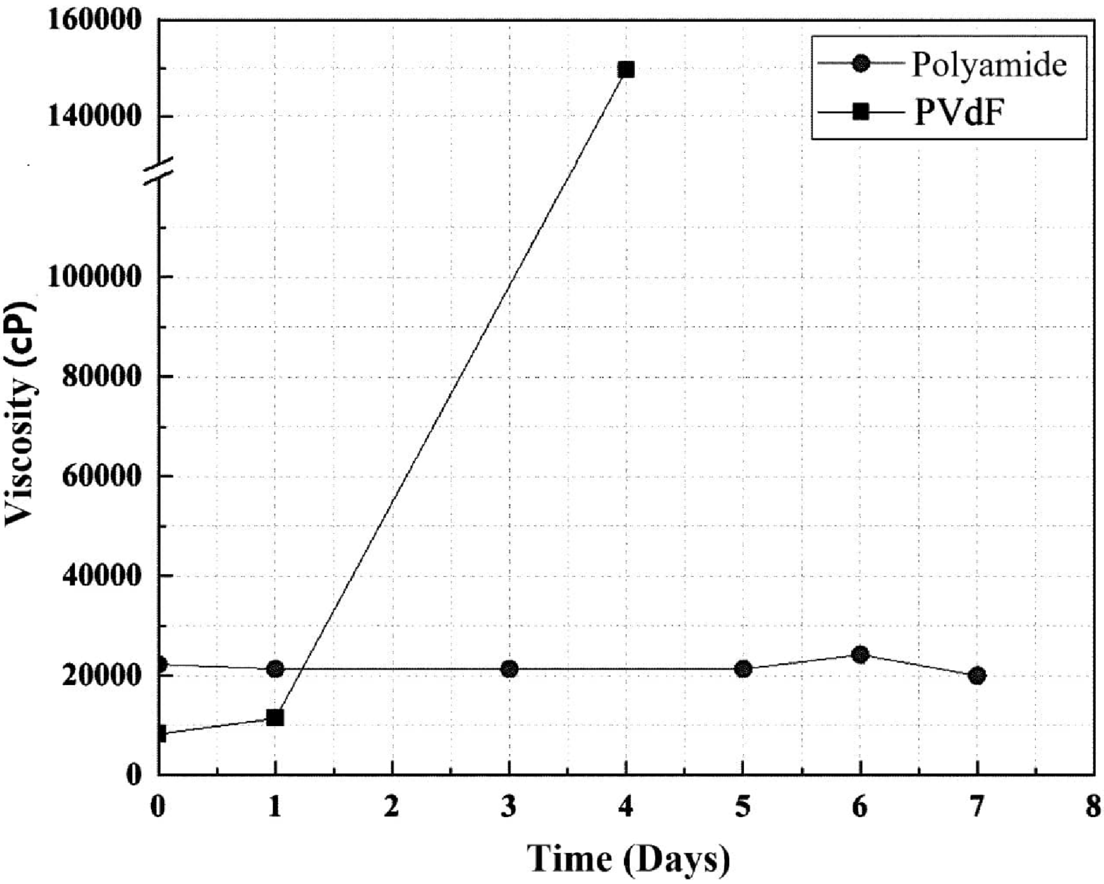
160000
140000
100000
80000
60000
40000
20000
0
Viscosity (cP)
0
1
2
3
4
5
6
7
8
Time (Days)
Polyamide
PVdF

**INTERNATIONAL SEARCH REPORT**

International application No.
**PCT/KR2025/008624**

**A. CLASSIFICATION OF SUBJECT MATTER**

**H01M 4/62**(2006.01)i; **H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); C08L 79/08(2006.01); H01G 11/38(2013.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리아미드계 바인더(polyamide-based binder), 지방족 구조(aliphatic structure), 방향족 구조(aromatic structure), 측쇄(side chain), 카보닐기(carbonyl group), 카복시기(carboxyl group), 에스터기(ester group), 양극 슬러리(positive electrode slurry), 리튬 전이금속 산화물(lithium transition metal oxide)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0133401 A (IDEMITSU KOSAN CO., LTD.) 14 December 2018 (2018-12-14)<br>paragraphs [0051]-[0126] | 1-17 |
| A | US 2021-0020946 A1 (SOLVAY SPECIALTY POLYMERS USA, LLC) 21 January 2021 (2021-01-21)<br>paragraphs [0015]-[0076] | 1-17 |
| A | KR 10-2020-0116921 A (ZEON CORPORATION) 13 October 2020 (2020-10-13)<br>paragraphs [0013]-[0024] | 1-17 |
| A | XU, Yueming et al. Novel polyimide binder for achieving high-rate capability and long-term cycling stability of $LiNi_{0.8}Co_{0.1}Mn_{0.1}O_2$ cathode via constructing polar and micro-branched crosslinking network structure. Journal of Energy Chemistry. 09 September 2022 (online publication date), vol. 76, pp. 19-31.<br>abstract; page 30; figure 1 | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 September 2025** | **23 September 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No. **PCT/KR2025/008624**

**C. DOCUMENTS CONSIDERED TO BE RELEVANT**

| Category* | Citation of document, with indication, where appropriate, of the relevant passages | Relevant to claim No. |
|---|---|---|
| A | LI, Jian et al. Water-soluble polyamide acid binder with fast $Li^+$ transfer kinetics for silicon suboxide anodes in lithium-ion batteries. ACS Applied Materials & Interfaces. 20 June 2023 (publication date), vol. 15, pp. 30302-30311. abstract; figure 1 | 1-17 |

Form PCT/ISA/210 (second sheet) (July 2022)

**INTERNATIONAL SEARCH REPORT**
**Information on patent family members**

International application No.
**PCT/KR2025/008624**

| Patent document cited in search report | Publication date (day/month/year) | Patent family member(s) | Publication date (day/month/year) |
|---|---|---|---|
| KR 10-2018-0133401 A | 14 December 2018 | CN 108886149 A | 23 November 2018 |
| | | EP 3442062 A1 | 13 February 2019 |
| | | TW 201807144 A | 01 March 2018 |
| | | US 10752733 B2 | 25 August 2020 |
| | | US 2019-0085126 A1 | 21 March 2019 |
| | | WO 2017-175838 A1 | 12 October 2017 |
| US 2021-0020946 A1 | 21 January 2021 | CN 111902473 A | 06 November 2020 |
| | | CN 111902473 B | 13 February 2024 |
| | | EP 3768770 A1 | 27 January 2021 |
| | | EP 3768770 B1 | 08 May 2024 |
| | | JP 2021-518472 A | 02 August 2021 |
| | | JP 7366046 B2 | 20 October 2023 |
| | | KR 10-2020-0135427 A | 02 December 2020 |
| | | KR 10-2774804 B1 | 05 March 2025 |
| | | US 12057581 B2 | 06 August 2024 |
| | | WO 2019-179971 A1 | 26 September 2019 |
| KR 10-2020-0116921 A | 13 October 2020 | CN 111656564 A | 11 September 2020 |
| | | CN 111656564 B | 06 December 2022 |
| | | EP 3751637 A1 | 16 December 2020 |
| | | JP 7276160 B2 | 18 May 2023 |
| | | KR 10-2700402 B1 | 28 August 2024 |
| | | US 12095090 B2 | 17 September 2024 |
| | | US 2021-0050594 A1 | 18 February 2021 |
| | | WO 2019-156086 A1 | 15 August 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240080648
- KR 20160039835